# FASCICULE DE BREVET EUROPEEN

(11) **EP 1 853 499 B1**
(45) Date de publication et mention de la délivrance du brevet: **18.07.2012**
(21) Numéro de dépôt: 06725996.0
(22) Date de dépôt: 28.02.2006
(51) Int. Cl.: B65G 47/244

(54) **DISPOSITIF POUR ORIENTER DES PREFORMES TUBULAIRES ALIMENTEES EN VRAC**
VORRICHTUNG ZUM AUSRICHTEN VON ROHRFÖRMIGEN VORFORMEN AUS DER SCHÜTTZUFÜHRUNG
DEVICE FOR ORIENTING BULK-FED TUBULAR PREFORMS

(30) Priorité: 02.03.2005 FR 0502120
(43) Date de publication de la demande: 14.11.2007
(73) Titulaire: Sidel Participations, 76930 Octeville Sur Mer (FR)
(72) Inventeur: MOUETTE, Patrick c/o Sidel Participations, 76930 Octeville sur Mer (FR); CHARPENTIER, Alain c/o Sidel Participations, F-76930 Octeville Sur Mer (FR); DEROUAULT, Philippe c/o Sidel Participations, F-76930 Octeville-Sur-Mer (FR)
(74) Mandataire: Cabinet Plasseraud
(86) Numéro de dépôt international: PCT/FR2006/000453
(87) Numéro de publication internationale: WO 2006/092498

(56) Documents cités:
- FR-A- 2 499 032
- GB-A- 2 224 986
- US-A- 3 722 657
- US-A- 4 085 839
- US-B1- 6 390 766

## Description

La présente invention concerne d'une façon générale le domaine de la fabrication de récipients (notamment de bouteilles, flacons ou analogues) en matière thermoplastique, telle que le PET, par soufflage ou étirage-soufflage de préformes et, plus spécifiquement, elle concerne des perfectionnements apportés aux dispositifs d'alimentation des préformes qui sont situés à l'entrée des installations de fabrication de tels récipients. Encore plus spécifiquement, l'invention s'attache à l'alimentation de préformes tubulaires, c'est-à-dire de préformes de forme générale cylindrique et allongée, dont la longueur du corps est nettement supérieure au diamètre (par exemple au moins trois ou quatre fois supérieure).

Les préformes sont introduites dans l'installation les unes à la suite des autres en position verticale avec le col en haut, en étant poussées pour pénétrer dans un organe de saisie et de chargement de l'installation tel qu'une roue horizontale à encoches. Pour que cette alimentation se déroule correctement, il est nécessaire non seulement que les préformes soient poussées positivement dans l'organe de saisie, mais aussi qu'elles y arrivent sans discontinuité, toutes disposées dans la position verticale requise, et sans que des préformes soient emboîtées l'une dans l'autre.

De façon courante, pour que ces conditions soient toutes simultanément réunies, les préformes, contenues dans une trémie de chargement, y sont prélevées par un élévateur, puis sont amenées à l'entrée de l'installation par gravité à l'aide d'un toboggan, sous forme de glissières ; en tête de ce toboggan est prévu un dispositif d'orientation comportant une trémie d'entrée dans laquelle les préformes sont déversées en vrac de l'élévateur ainsi que le mécanisme d'orientation proprement dit (communément constitué de rouleaux orienteurs) et divers éléments destinés à introduire les préformes une à une dans le toboggan, à éliminer les préformes emboîtées les unes dans les autres, etc.

Dans les installations de très grande capacité capables de produire plusieurs milliers, voire plusieurs dizaines de milliers de récipients à l'heure, le dispositif d'orientation des préformes non seulement est disposé en hauteur, mais est de très grandes dimensions, et son ouverture peut être située à une hauteur de plusieurs mètres. Il est donc nécessaire de lui adjoindre un matériel approprié (passerelle avec rambarde, échelle, ...) pour que le personnel de surveillance et d'entretien puisse avoir un accès parfaitement sécurisé au dispositif d'orientation ainsi qu'aux dispositifs associés à celui-ci (élévateur reliant la trémie de chargement à la trémie d'entrée, etc) qui sont situés en hauteur. Ce matériel, en général métallique, coûte très cher et est très encombrant. En outre, un dispositif d'alimentation en préformes ainsi agencé occupe un espace important.

En outre, le toboggan est constitué essentiellement de deux glissières parallèles sur lesquelles les préformes reposent par leur collerette. Du fait de l'inclinaison des glissières et de la position approximativement horizontale des collerettes due à la situation globalement verticale des préformes, les collerettes ne reposent sur les glissières qu'en deux points symétriquement opposés de leur périphérie, et donc de façon peu stable ; il en résulte que le déplacement par gravité des préformes sur les glissières ne s'effectue pas de façon régulière en raison de frictions non constantes et s'accompagne d'un balancement des préformes qui peut avoir des conséquences préjudiciables à un fonctionnement correct et régulier de l'installation (coincement de préformes, éjection de préformes, ...) .

Il existe donc, de la part des utilisateurs de telles installations, une demande pressante pour des dispositifs d'alimentation moins onéreux et moins volumineux, tout en étant propres à déplacer les préformes de façon plus régulière et sans possibilité d'incidents.

L'invention a précisément pour but de satisfaire ces exigences et de proposer des moyens qui répondent mieux que les dispositifs actuels aux diverses exigences de la pratique.

Le document US-A-3722657 décrit un dispositif d'orientation pour orienter des objects tubulaires par des moyens d'alimentation, comprenant deux convoyeurs continus sous fin disposés côte à côte, ces deux convoyeurs étant entraînés par des moyens d'entraînement dans des sens inverses l'un de l'autre.

A ces fins, l'invention propose un dispositif d'orientation pour orienter des préformes tubulaires délivrées en vrac par des moyens d'alimentation, lequel dispositif d'orientation, étant agencé conformément à l'invention, se caractérise en ce qu'il comprend :
- deux convoyeurs continus sans fin disposés côte à côte et présentant respectivement deux brins qui s'étendent sensiblement parallèlement l'un à l'autre et qui sont écartés l'un de l'autre horizontalement d'une distance supérieure à la plus grande dimension transversale des préformes, les moyens d'alimentation en préformes étant situés au-dessus de ces deux convoyeurs et à proximité de l'une de leurs extrémités, ces deux convoyeurs étant entraînés par des moyens d'entraînement dans des sens inverses l'un de l'autre de manière à faire pivoter celles parmi les préformes qui arrivent en travers sur les convoyeurs sans fin et à les faire tomber, orientées longitudinalement, dans l'intervalle entre les deux convoyeurs sans fin,
   et
- un tapis sans fin de recueil des préformes s'étendant sous les deux susdits convoyeurs sans fin et parallèlement à ceux-ci pour recueillir et déplacer les préformes couchées alignées longitudinalement les unes à la suite des autres.

Il faut souligner que le dispositif d'orientation proposé par l'invention ne constitue pas un dispositif d'alimentation complet, mais constitue un dispositif devant être associé à d'autres organes ou dispositifs (trémie d'alimentation, démêleur pour séparer les préformes emboîtées, espaceur de préformes, moyens de reprise des préformes couchées alignées longitudinalement les unes à la suite des autres,...) dont l'ensemble constitue un dispositif d'alimentation proprement dit.

En outre, le dispositif d'orientation conforme à l'invention permet de s'affranchir d'un système élévateur et les moyens d'alimentation en préformes peuvent être constitués d'un organe de stockage, tel qu'une trémie de chargement, dans lequel les préformes sont disposées en vrac et dont elles tombent par gravité sur le dispositif d'orientation. Alternativement, les moyens d'alimentation peuvent être constitués par un organe de stockage, tel qu'une trémie de chargement, situé en amont du dispositif, et par un organe intermédiaire (tapis ou autre) qui amène les préformes de l'organe de stockage au-dessus des convoyeurs sans fin entraînés en sens inverses l'un de l'autre.

Le dispositif d'orientation conforme à l'invention offre le grand avantage d'être entièrement situé à hauteur constante, et donc peut être disposé à hauteur d'homme (par exemple une hauteur de l'ordre de 1 m à 1,5 m), ce qui permet au personnel d'en contrôler le fonctionnement et éventuellement d'intervenir sur le dispositif tout en restant sur le sol sur lequel repose l'installation. La partie la plus élevée de toute l'installation mettant en oeuvre un tel dispositif se trouve être l'ouverture supérieure de la trémie de chargement par laquelle les préformes y sont introduites lorsque les susdits moyens d'alimentation comprennent une telle trémie. Dans ce cas là, en tout cas, ladite ouverture supérieure est située à un niveau notablement inférieur au niveau haut des élévateurs de l'art antérieur et, là aussi, le personnel de surveillance et d'intervention n'a plus à évoluer à des hauteurs importantes comme c'était le cas dans les dispositifs antérieurs. Le résultat est que la structure d'ensemble peut être considérablement simplifiée du fait que la plus grande partie des apparaux de sécurité (plateforme, échelle, ...) peuvent être supprimés ou allégés. Il en résulte ainsi une réduction substantielle du coût de l'ensemble de l'installation.

Une autre conséquence importante de l'agencement abaissé du dispositif conforme à l'invention réside dans le gain de place vertical, qui autorise une mise en place dans des locaux qui ne présentent pas nécessairement une grande hauteur sous plafond, avec, là encore une possibilité de réduction des coûts sur la construction du bâtiment abritant l'installation.

Un autre avantage du dispositif conforme à l'invention tient à son efficacité de fonctionnement : les préformes couchées sont déplacées positivement par les convoyeurs et le tapis, ce qui écarte les inconvénients inhérents à la friction irrégulière des collerettes des préformes glissant sur les glissières sous la seule action de la gravité.

Pour que les préformes parvenues sur le tapis soient évacuées rapidement afin de ne pas gêner l'arrivée des préformes suivantes en cours de redressement sur les deux convoyeurs sans fin, et pour finalement assurer un fonctionnement satisfaisant du dispositif, il est avantageux que le tapis sans fin possède une vitesse sensiblement supérieure à celle des deux convoyeurs sans fin, et en particulier à celle du convoyeur circulant dans le même sens.

Pour simplifier l'agencement général du dispositif, on peut prévoir que les deux convoyeurs sans fin soient entraînés dans des sens inverses à partir d'une même unité motrice ; de même, on peut prévoir que les deux convoyeurs sans fin soient entraînés avec des vitesses sensiblement égales, ce qui nécessite la présence d'un simple inverseur de mouvement lorsqu'ils sont entraînés à partir d'une même unité motrice.

Dans un mode de réalisation pratique relativement ramassé, il est avantageux que chaque convoyeur sans fin soit disposé verticalement et que les susdits brins parallèles soient les brins supérieurs respectifs des deux convoyeurs, de sorte que le personnel de surveillance et d'entretien peut accéder aisément à la zone centrale du dispositif.

Bien que de nombreuses solutions de mise en oeuvre concrète puissent être envisagées pour réaliser les convoyeurs, il est toutefois plus simple, au moins dans la plupart des applications envisageables de façon courante, que les deux convoyeurs sans fin soient des tapis ou courroies sans fin. Dans ce cas, pour assurer que toutes les préformes retombent bien centralement sur le tapis de recueil et éviter qu'elles roulent vers l'extérieur, il est avantageux que les brins supérieurs respectifs des deux convoyeurs sans fin soient inclinés transversalement l'un vers l'autre.

On peut également prévoir, isolément ou, avantageusement, en complément de la disposition précédente lorsque celle-ci est mise en oeuvre, que les deux convoyeurs sans fin soient bordés extérieurement par des carters respectifs propres à empêcher les préformes de tomber hors du dispositif.

Pour que les préformes soient mises par le dispositif dans un alignement satisfaisant, il convient que l'écartement mutuel des deux convoyeurs soit peu supérieur à la dimension transversale des préformes. Or, selon la taille et/ou la forme des récipients à fabriquer, on peut avoir recours à des préformes de conformation et/ou de taille diverses, et notamment à des préformes ayant des dimensions transversales différentes. Aussi, pour élargir utilement le champ d'utilisation du dispositif d'orientation et le rendre apte à traiter une diversité de types de préformes, on peut prévoir qu'au moins un des deux convoyeurs sans fin soit supporté de manière mobile transversalement afin que l'écartement entre les deux convoyeurs sans fin soit réglable en fonction de la dimension transversale des préformes à traiter.

Comme les préformes doivent, en aval du dispositif d'orientation, être espacées les unes des autres avant d'être reprises par un dispositif approprié (par exemple une vis d'entraînement vers une roue de chargement), il est intéressant que les préformes commencent, dès qu'elles ont été orientées, à être espacées les unes des autres. A cet effet, on peut prévoir de façon simple que le tapis de recueil soit constitué de plusieurs tapis sans fin successifs ayant des vitesses respectives croissantes de manière à accroître l'intervalle entre les préformes successives afin de favoriser leur basculement sauf interférences entre elles par un système aval, le tapis pouvant alors s'étendre au-delà des convoyeurs sans fin si nécessaire. Dans ce cas, pour que cependant le dispositif n'ait pas une longueur excessive; on peut avantageusement faire en sorte que la transition entre notamment les premier et second tapis sans fin se situe entre les deux convoyeurs sans fin.

L'invention sera mieux comprise à la lecture de la description détaillée qui suit de certains modes de réalisation préférés donnés uniquement à titre purement illustratif. Dans cette description, on se réfère aux dessins annexés sur lesquels :
- la figure 1 est une vue très schématique, en perspective de côté, d'un mode de réalisation d'un dispositif d'orientation de préformes agencé conformément à l'invention ;
- la figure 1A est une vue schématique en bout du dispositif de la figure 1, de façon à illustrer un exemple préféré de réalisation de ce dernier ; et
- la figure 2 est une vue très schématique d'une variante préférée de réalisation des dispositifs des figures 1 et 1A.

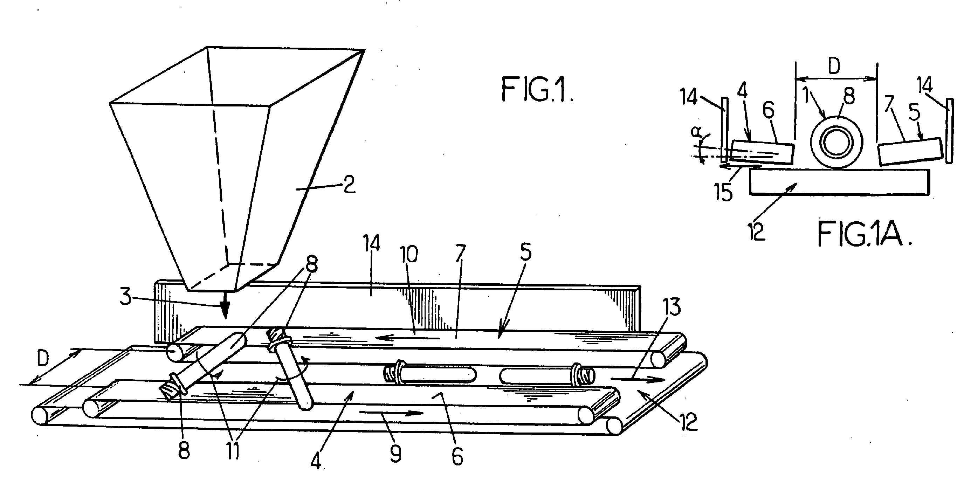

On se reporte tout d'abord à la figure 1 sur laquelle est montré très schématiquement un dispositif d'orientation propre à permettre d'orienter des préformes 1 tubulaires délivrées en vrac par des moyens d'alimentation 2 pouvant comprendre une trémie de chargement, ou être directement constitués par une telle trémie comme illustré sur la figure 1 (la chute des préformes 1 à la sortie de la trémie située à la base de celle-ci est schématisée par la flèche 3).

Le dispositif d'orientation comprend :
- deux convoyeurs 4, 5, sans fin qui sont disposés côte à côte et qui présentent respectivement deux brins 6 et 7 s'étendant sensiblement parallèlement l'un à l'autre ; les deux brins 6 et 7 des convoyeurs sont écartés horizontalement l'un de l'autre d'une distance D qui est supérieure, sans toutefois l'excéder trop notablement, à la plus grande dimension transversale des préformes, autrement dit en pratique au diamètre de la collerette 8 des préformes ; la trémie constituant les moyens d'alimentation 2 en préformes est située au-dessus de ces deux convoyeurs 4, 5, à proximité de l'une de leurs extrémités (celle de gauche sur la représentation de la figure 1) ; en outre les deux convoyeurs 4, 5 sans fin sont entraînés, par des moyens d'entraînement non représentés, dans des sens inverses l'un de l'autre (lesquels sens sont schématisés respectivement par deux flèches référencées 9 et 10) de manière à amener celles parmi les préformes 1 qui tombent en travers sur les convoyeurs 4, 5 sans fin, à pivoter (flèches 11) et à tomber, orientées longitudinalement, dans l'intervalle entre ces deux convoyeurs ;
   et
- un tapis 12 sans fin de recueil s'étendant sous l'intervalle entre les deux convoyeurs 4, 5 sans fin et parallèlement à ceux-ci pour recueillir et déplacer les préformes 1 couchées alignées longitudinalement les unes à la suite des autres (le sens de déplacement du brin supérieur du tapis 12 est schématisé par la flèche 13) .

De façon simple, les deux convoyeurs 4, 5 sans fin sont entraînés dans des sens inverses avec des vitesses sensiblement égales, de sorte qu'ils peuvent être entraînés à partir d'une même unité motrice reliée à un simple mécanisme d'inversion de sens.

Pour obtenir un fonctionnement fiable du dispositif, il est souhaitable que le tapis 12 sans fin possède une vitesse sensiblement supérieure à celle des deux convoyeurs 4, 5 sans fin, de sorte que les préformes arrivant sur le tapis 12 sont rapidement évacuées, ce qui évite que les préformes retombent les unes sur les autres sur le tapis.

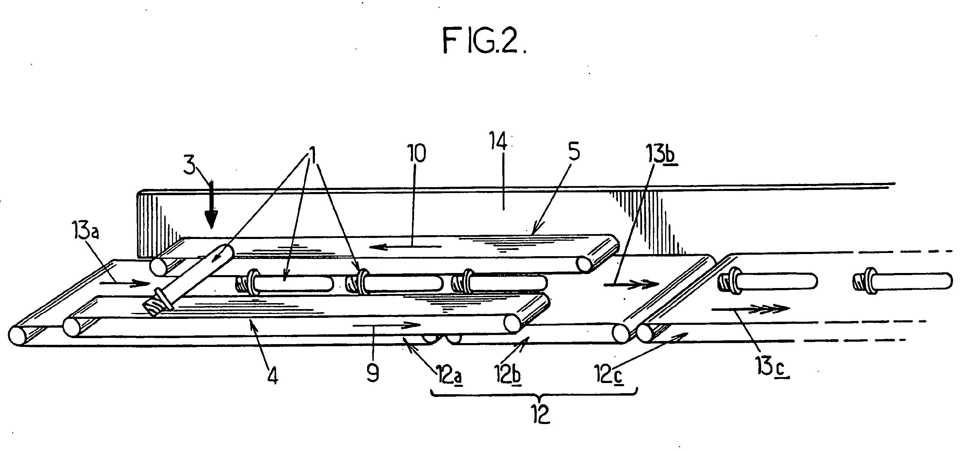

Bien que divers agencements soient envisageables pour les deux convoyeurs 4, 5 sans fin, la solution qui semble la mieux adaptée en raison de la compacité transversale à laquelle elle conduit consiste en ce que chaque convoyeur 4, 5 sans fin soit disposé verticalement et en ce que les susdits brins 6 et 7 parallèles soient les brins supérieurs respectifs des deux convoyeurs, comme illustré sur les figures 1 et 2. Dans ces conditions, le personnel de surveillance et d'entretien peut accéder facilement à la zone centrale du dispositif.

Chacun des convoyeurs 4, 5 peut être équipé d'un organe de transport de tout type : par exemple chaîne simple ou munie d'éléments saillants d'entraînement, voire un simple câble équipé d'éléments saillants d'entraînement. Toutefois, dans un mode de réalisation préféré en pratique et illustré à la figure 1, les deux convoyeurs 4, 5, sans fin sont équipés d'un organe de transport en forme de bande plane et sont donc agencés en tapis ou courroie sans fin. Dans ce cas, il est intéressant que, comme illustré à la figure 1A, les brins 6 et 7 supérieurs respectifs des deux convoyeurs 4, 5 soient inclinés transversalement l'un vers l'autre (angle α sur la figure 1A) : les préformes 1 qui tombent en travers sur ces brins 6 et 7 supérieurs sont alors plus facilement ramenées vers le centre et ont moins tendance à tomber vers l'extérieur des convoyeurs.

Toujours pour éviter que des préformes tombent vers l'extérieur des convoyeurs, il est possible de prévoir que les deux convoyeurs 4, 5, sans fin soient bordés extérieurement par des carters 14 respectifs (un seul est dessiné à la figure 1), cette disposition pouvant être mise en oeuvre seule ou en combinaison avec la disposition précédente comme illustré à la figure 1A.

Dans une variante de réalisation très intéressante, on peut faire en sorte qu'au moins un des deux convoyeurs 4, 5, sans fin soit supporté de manière mobile transversalement (laquelle manière mobile est schématisée par la double flèche 15 à la figure 1A) de manière que l'écartement D entre les deux convoyeurs sans fin soit réglable en fonction de la dimension transversale des préformes ; éventuellement, les deux convoyeurs peuvent être déplacés symétriquement de façon qu'ils demeurent disposés symétriquement par rapport à l'axe central du tapis 12 de recueil. Cette disposition permet d'adapter le dispositif au traitement de préformes de dimensions transversales et/ou de formes diverses, et donc d'élargir son champ d'emploi.

En prévision de la mise à espacement à pas constant des préformes successives pour leur chargement à l'entrée de l'installation de fabrication des récipients, il est intéressant de profiter de la présence du tapis 12 pour commencer à y espacer les préformes les unes des autres. A cet effet, on prévoit, comme illustré schématiquement à la figure 2, que le tapis 12 est constitué de plusieurs tapis sans fin successifs 12a, 12b, 12c, ... ayant des vitesses respectives croissantes (symbolisées par les flèches 13a, 13b, 13c, ... ayant un nombre croissant de pointes) afin de favoriser leur basculement sauf interférences entre elles par un système aval, le tapis 12 pouvant s'étendre alors au-delà des deux convoyeurs 4, 5. Pour ne pas entraîner cependant un allongement excessif de l'installation, il est possible de faire en sorte que la transition entre notamment les premier et second tapis sans fin 12a, 12b se situe entre les deux convoyeurs 4, 5, sans fin.

Comme cela a été expliqué plus haut, les préformes sont introduites dans l'installation de fabrication des récipients en position verticale, col en haut. Comme le dispositif d'orientation conforme à l'invention délivre les préformes en position couchée, il faut prévoir, en aval, un dispositif de redressement propre à mettre les préformes en position verticale, col en haut, et cela quelle que soit l'orientation avec laquelle la préforme est délivrée par le dispositif d'orientation (col tourné vers l'avant ou col tourné vers l'arrière, par rapport au sens de déplacement du tapis 12). De nombreuses solutions techniques connues de l'homme du métier peuvent être adoptées à cet effet.

Par ailleurs, toujours comme cela a été envisagé plus haut, les moyens d'alimentation 2, au lieu d'être constitués par une trémie comme illustré sur la figure 1, peuvent être constitués par un organe de stockage, tel qu'une trémie de chargement, situé en amont du dispositif, et par un organe intermédiaire (tapis ou autre) qui amène les préformes de l'organe de stockage au-dessus des convoyeurs sans fin entraînés en sens inverses l'un de l'autre.

## Revendications

1. Dispositif d'orientation pour orienter des préformes (1) tubulaires délivrées en vrac par des moyens d'alimentation (2), comprenant :
- deux convoyeurs (4, 5) continus sans fin disposés côte à côte et présentant respectivement deux brins (6, 7) qui s'étendent sensiblement parallèlement l'un à l'autre et qui sont écartés l'un de l'autre horizontalement d'une distance (D) supérieure à la plus grande dimension transversale des préformes (1), les moyens d'alimentation (2) en préformes (1) étant situés au-dessus de ces deux convoyeurs (4, 5) sans fin et à proximité de l'une de leurs extrémités, ces deux convoyeurs (4, 5) sans fin étant entraînés par des moyens d'entraînement dans des sens (9, 10) inverses l'un de l'autre de manière à faire pivoter celles parmi les préformes (1) qui arrivent en travers sur les convoyeurs (4, 5) sans fin et à les faire tomber, orientées longitudinalement, dans l'intervalle entre les deux convoyeurs (4, 5) sans fin,
et
- un tapis (12) sans fin de recueil des préformes (1) s'étendant sous les deux susdits convoyeurs (4, 5) sans fin et parallèlement à ceux-ci pour recueillir et déplacer les préformes (1) couchées alignées longitudinalement les unes à la suite des autres.

2. Dispositif d'orientation selon la revendication 1, **caractérisé en ce que** le tapis (12) sans fin a une vitesse sensiblement supérieure à celle des deux convoyeurs (4, 5) sans fin.

3. Dispositif d'orientation selon la revendication 1 ou 2, **caractérisé en ce que** les deux convoyeurs (4, 5) sans fin sont entraînés dans des sens inverses avec des vitesses sensiblement égales.

4. Dispositif d'orientation selon l'une quelconque des revendications 1 à 3, **caractérisé en ce que** chaque convoyeur (4, 5) sans fin est disposé verticalement et **en ce que** les susdits brins (6, 7) parallèles sont les brins (6, 7) supérieurs respectifs des deux convoyeurs (4, 5) sans fin.

5. Dispositif d'orientation selon l'une quelconque des revendications 1 à 4, **caractérisé en ce que** les deux convoyeurs (4, 5) sans fin sont des tapis ou courroies sans fin.

6. Dispositif d'orientation selon la revendication 5, **caractérisé en ce que** les brins (6, 7) supérieurs respectifs des deux convoyeurs (4, 5) sans fin sont inclinés (α) transversalement l'un vers l'autre.

7. Dispositif d'orientation selon l'une quelconque des revendications 1 à 6, **caractérisé en ce que** les deux convoyeurs (4, 5) sans fin sont bordés extérieurement par des carters (14) respectifs propres à empêcher les préformes (1) de tomber hors du dispositif.

8. Dispositif d'orientation selon l'une quelconque des revendications 1 à 7, **caractérisé en ce qu'**au moins un des deux convoyeurs (4, 5) sans fin est supporté de manière mobile (15) transversalement de manière que l'écartement (D) entre les deux convoyeurs (4, 5) sans fin soit réglable en fonction de la dimension transversale des préformes (1).

9. Dispositif d'orientation selon l'une quelconque des revendications 1 à 8, **caractérisé en ce que** le tapis (12) sans fin de recueil est constitué de plusieurs tapis sans fin (12a, 12b, 12c, ...) successifs ayant des vitesses respectives croissantes de manière à accroître l'intervalle entre les préformes (1) successives afin de favoriser leur basculement sauf interférences entre elles par un système aval.

10. Dispositif d'orientation selon la revendication 9, **caractérisé en ce que** la transition entre les premier et second tapis sans fin (12a, 12b) se situe entre les deux convoyeurs (4, 5) sans fin.

## Claims

1. An orientation device for orienting tubular preforms (1) delivered in bulk by feed means (2), comprising:
- two continuous endless conveyors (4, 5) positioned side by side and each respectively having two strands (6, 7) which run substantially parallel to one another and which are separated from one another horizontally by a distance (D) greater than the longest transverse dimension of the performs (1), the preform (1) feed means (2) being situated above these two endless conveyors (4, 5) and near one of their ends, these two endless conveyors (4, 5) being driven by drive means in opposite directions (9, 10) to one another so as to cause those of the preforms (1) which arrive crosswise on the endless conveyors (4, 5) to pivot and drop, oriented longitudinally, into the space between the two endless conveyors (4, 5),
and
- an endless collecting belt (12) for collecting the preforms (1) running under the aforementioned two endless conveyors (4, 5) and parallel thereto to collect the preforms (1) and move them along, lying down longitudinally aligned one after the other.

2. The orientation device as claimed in claim 1, **characterized in that** the endless belt (12) has a speed appreciably higher than that of the two endless conveyors (4, 5).

3. The orientation device as claimed in claim 1 or 2, **characterized in that** the two endless conveyors (4, 5) are driven in opposite directions at substantially equal speeds.

4. The orientation device as claimed in any one of claims 1 to 3, **characterized in that** each endless conveyor (4, 5) is arranged vertically and **in that** the aforementioned parallel strands (6, 7) are the respective top strands (6, 7) of the two endless conveyors (4, 5).

5. The orientation device as claimed in any one of claims 1 to 4, **characterized in that** the two endless conveyors (4, 5) are endless belts or strips.

6. The orientation device as claimed in claim 5, **characterized in that** the respective top strands (6, 7) of the two endless conveyors (4, 5) are inclined (α) transversely toward one another.

7. The orientation device as claimed in any one of claims 1 to 6, **characterized in that** the two endless conveyors (4, 5) are externally bordered by respective casings (14) able to prevent the preforms (1) from falling off the device.

8. The orientation device as claimed in any one of claims 1 to 7, **characterized in that** at least one of the two endless conveyors (4, 5) is supported in such a way that it can move (15) transversely so that the separation (D) between the two endless conveyors (4, 5) can be adjusted according to the transverse dimension of the performs (1).

9. The orientation device as claimed in any one of claims 1 to 8, **characterized in that** the endless collecting belt (12) consists of several successive endless belts (12a, 12b, 12c, etc.) having increasing respective speeds so as to increase the spacing between the successive preforms (1) so as to make it easier for them to be toppled over by a downstream system except if interfering with one another.

10. The orientation device as claimed in claim 9, **characterized in that** the transition between the first and second endless belts (12a, 12b) is located between the two endless conveyors (4, 5).

## Patentansprüche

1. Ausrichtungsvorrichtung zum Ausrichten von röhrenförmigen Vorformlingen (1), die in loser Schüttung über ein Zuführmittel (2) zugeführt werden, die Ausrichtungsvorrichtung mit:
- zwei Endlosfördermitteln (4, 5), die Seite an Seite angeordnet sind und entsprechend zwei Stränge (6, 7) bilden, die sich im Wesentlichen parallel zueinander erstrecken und die horizontal mit einem Abstand (D) voneinander beabstandet sind, der größer als die größte Abmessung in Querrichtung der Vorformlinge (1) ist, wobei das Vorformlingzuführmittel (2) über den beiden Endlosfördermitteln (4, 5) angeordnet ist und die Endlosfördermittel (4, 5) in der Nähe einer ihrer Enden durch ein Antriebsmittel in zueinander entgegengesetzten Richtungen (9, 10) angetrieben werden, sodass die Vorformlinge, die quer zu den Endlosfördermitteln (4, 5) ankommen, gedreht und in Längsrichtung ausgerichtet in den Zwischenraum zwischen den zwei Endlosfördermitteln (4, 5) fallen gelassen werden, und
- einem Sammelförderband (12) für Vorformlinge (1), das sich unter den zwei obengenannten Endlosfördermitteln (4, 5) und parallel zu diesen erstreckt, um die abgelegten und längs ausgerichteten Vorformlinge (1) nacheinander zu sammeln und zu versetzen.

2. Ausrichtungsvorrichtung nach Anspruch 1, **dadurch gekennzeichnet, dass** das Förderband (12) eine Geschwindigkeit aufweist, die im Wesentlichen höher als die der zwei Endlosfördermittel (4, 5) ist.

3. Ausrichtungsvorrichtung nach Anspruch 1 oder 2, **dadurch gekennzeichnet, dass** die zwei Endlosfördermittel (4, 5) im Wesentlichen mit der gleichen Geschwindigkeit in entgegengesetzten Richtungen angetrieben werden.

4. Ausrichtungsvorrichtung nach einem der Ansprüche 1 bis 3, **dadurch gekennzeichnet, dass** jedes Endlosfördermittel (4, 5) vertikal angeordnet ist und dadurch, dass die parallelen Stränge (6, 7) jeweils die oberen Stränge (6, 7) der zwei Endlosfördermittel (4, 5) sind.

5. Ausrichtungsvorrichtung nach einem der Ansprüche 1 bis 4, **dadurch gekennzeichnet, dass** die zwei Endlosfördermittel (4, 5) Förderbänder oder Transportbänder sind.

6. Ausrichtungsvorrichtung nach Anspruch 5, **dadurch gekennzeichnet, dass** jeweils die oberen Stränge (6, 7) der zwei Endlosfördermittel quer zueinander geneigt (α) sind.

7. Ausrichtungsvorrichtung nach einem der Ansprüche 1 bis 6, **dadurch gekennzeichnet, dass** die zwei Endlosfördermittel (4, 5) außen jeweils durch Gehäuse (14) begrenzt sind, die angepasst sind, die Vorformlinge (1) daran zu hindern, aus der Vorrichtung zu fallen.

8. Ausrichtungsvorrichtung nach einem der Ansprüche 1 bis 7, **dadurch gekennzeichnet, dass** mindestens eins der zwei Endlosfördermittel (4, 5) in Querrichtung auf eine bewegliche Weise (15) unterstützt ist, sodass der Abstand (D) zwischen den zwei Endlosfördermitteln (4, 5) in Abhängigkeit der Querabmessung der Vorformlinge (1) einstellbar ist.

9. Ausrichtungsvorrichtung nach einem der Ansprüche 1 bis 8, **dadurch gekennzeichnet, dass** das Sammelförderband (12) aus mehreren aufeinanderfolgenden Förderbändern (12a, 12b, 12c, ...) mit jeweils ansteigender Geschwindigkeit zusammengesetzt ist, sodass der Abstand zwischen aufeinanderfolgenden Vorformlingen (1) vergrößert wird, um ihr Abkippen durch eine nachfolgende Einrichtung ohne gegenseitige Behinderung zu unterstützen.

10. Ausrichtungsvorrichtung nach Anspruch 9, **dadurch gekennzeichnet, dass** sich der Übergang zwischen dem ersten und zweiten Förderband (12a, 12b) zwischen den beiden Endlosfördermitteln (4, 5) befindet.
